# EUROPÄISCHE PATENTANMELDUNG

(11) **EP 4 831 421 A1**
(43) Veröffentlichungstag der Anmeldung: **28.10.2026**
(21) Anmeldenummer: 26174228.2
(22) Anmeldetag: 23.04.2026
(51) Int. Cl.: E04F 13/10, B32B 5/02, B32B 7/12, B32B 27/36, E04C 2/24

(54) **WANDUNGSELEMENT SOWIE VERFAHRUNG ZUR HERSTELLUNG EINES WANDUNGSELEMENTES**

(30) Priorität: 23.04.2025 DE 102025115580
(71) Anmelder: Komar Products GmbH & Co. KG, 83059 Kolbermoor (DE)
(72) Erfinder: Häusler, Matthias, 83059 Kolbermoor (DE)
(74) Vertreter: Flach Bauer & Partner Patentanwälte mbB

(57) **Zusammenfassung**

Ein Wandungselement (10) für ein Gebäude, insbesondere ein Wand-, Decken- und/oder Dachelement, hat eine Holzlage (14) und eine Vlieslage (12). Die Holzlage (14) ist aus Brettsperrholz, und die Vlieslage (12) ist aus einem einstückigen Vlies (16)

Zudem ist ein Verfahren zur Herstellung eines Wandungselements (10) gezeigt.

## Beschreibung

Die Erfindung betrifft ein Wandungselement für ein Gebäude sowie ein Verfahren zur Herstellung eines solchen Wandungselements.

Wandungselemente aus Holz, mit denen sich Gebäude errichten lassen, sind bekannt. Üblicherweise kommt hierzu Brettsperrholz zum Einsatz, das in einem Werk zugeschnitten und abgebunden wird, um damit schnell und effizient auf der entsprechenden Baustelle das Gebäude zu errichten.

Sowohl tragende bzw. aussteifende als auch nicht-tragende bzw. nicht-aussteifende Trennwände werden aus Brettsperrholz hergestellt.
Brettsperrholz ist jedoch vergleichsweise rau, sodass bekannte Methoden zur optischen Aufwertung der Wand, wie Streichen oder Tapezieren, auf Brettsperrholz direkt nur schwerlich möglich ist. Bisherige Wandungselemente erfordern daher nachträgliche Bearbeitung wie Spachteln und Schleifen, um ein Wandungselement mit einer streichfähigen Oberfläche zu erhalten.

Um ein Streichen oder Tapezieren zu ermöglichen, ist es bekannt, zunächst eine formbare Masse, wie Gips, auf dem Brettsperrholz zu verteilen und sie anschließend glattzustreichen. Anschließend muss die Masse trocknen. Durch das Aufbringen der formbaren Masse ist dieser Prozess sehr aufwendig und ist mit hohen Arbeitskosten, langen Trocknungszeiten sowie erhöhtem Materialeinsatz verbunden.

Es ist daher Aufgabe der Erfindung, ein Wandungselement für ein Gebäude sowie ein Verfahren zur Herstellung eines solchen Wandungselements bereitzustellen, bei denen das Wandungselement optisch hochwertig ist und/oder gestrichen werden kann und das zugleich kostengünstig ist.

Die Aufgabe wird gelöst durch ein Wandungselement für ein Gebäude, insbesondere ein Wand-, Decken- und/oder Dachelement, mit einer Holzlage und einer Vlieslage. Die Holzlage ist aus Brettsperrholz, und die Vlieslage ist aus einem einstückigen Vlies.

Die Vlieslage ist insbesondere fugenlos und/oder anstreichbar.

Durch die Verwendung eines anstreichbaren Vlieses, das auf der Holzlage befestigt ist, ist es möglich, das Wandungselement zu streichen oder optisch hochwertig bereitzustellen.

Gleichzeitig werden sichtbare Kanten und Übergänge - die zu unansehnlichen Ergebnissen führen würden - dadurch vermieden, dass das Vlies einstückig ist. Es wird somit ein Wandungselement bereitgestellt, das sich hervorragend und ohne optische Auffälligkeiten streichen lässt oder ein Motiv aufweist.

Zugleich ist das erfindungsgemäße Wandungselement deutlich kostengünstiger.

Insbesondere weist das Wandungselement keine Lage aus einer formbaren Masse, wie Gips, auf.

Das Wandungselement ist beispielweise eine Trennwand, eine abgehängte Decke, ein Wandverkleidungselement und/oder ein Dachelement.

Das Wandungselement kann zum Beispiel sowohl eine tragende bzw. aussteifende als auch nicht-tragende bzw. nicht-aussteifende Trennwand sein.

Insbesondere ist die Vlieslage eine äußere Lage des Wandungselements oder die Vlieslage ist an ihrer der Holzlage abgewandten Seite lediglich von einer Farblage bedeckt. Alternativ oder zusätzlich ist die Holzlage eine äußere Lage des Wandungselements.

Beispielsweise ist das Wandungselement frei von einer Harzschicht, einer Harzlage und/oder einem auf Harz basierendem Klebstoff.

In einer Ausgestaltung ist die Vlieslage, insbesondere das Vlies, auf der Holzlage befestigt, insbesondere vollflächig und/oder direkt. Auf diese Weise ist die Konstruktion optisch noch ansprechender bzw. weiter vereinfacht.

Beispielsweise ist die Vlieslage bzw. das Vlies auf die Holzlage geklebt, wobei als Klebstoff zum Beispiel Leim verwendet wird.

Unter "direkt befestigen" wird im Rahmen dieser Offenbarung insbesondere verstanden, dass keine Zwischenlagen (außer ggf. dem Klebstoff) zwischen dem Vlies und der Holzlage vorhanden sind.

In einer Ausführungsform ist das Wandungselement vorgefertigt. Das Wandungselement ist beispielsweise in einem Werk hergestellt und nicht auf der Baustelle des zu errichtenden Gebäudes.

Damit das Wandungselement auch in großen Gebäuden und/oder Räumen eingesetzt werden kann, kann das Wandungselement, insbesondere das Vlies, eine Länge bzw. Rollbreite von mehr als 3,2 m, insbesondere von wenigstens 3,5 m, weiter besonders von wenigstens 5 m haben.

Die Holzlage und die Vlieslage erstrecken sich beispielsweise über die gesamte Höhe und Länge, d.h. die Hoch- und Längsausdehnung, des Wandungselements.

Um als Wand zur Abtrennung von Räumen zu dienen, kann das Wandungselement, insbesondere das Vlies, eine Höhe von wenigstens 2,50 m, insbesondere von wenigstens 3,0 m haben.

In einer Ausführungsform besteht das Wandungselement aus der Holzlage und der Vlieslage; oder das Wandungselement besteht aus der Holzlage und der Vlieslage sowie einem Klebstoff und/oder einer Farblage.

Die Farblage ist beispielsweise Wandfarbe, wie eine Dispersionsfarbe.

In einer Ausgestaltung weist das Vlies Kunstfasern, insbesondere Polyester, Zellulosefasern und/oder Textilfasern auf, um ein haltbares Vlies zu erhalten.

Das Vlies ist beispielsweise diffusionsoffen und/oder dimensionsstabil. Hierdurch eignet sich das Vlies sehr gut, um die Oberfläche der Holzlage anstreichbar zu machen oder direkt optisch aufzuwerten. Zudem kann das Vlies sehr reißfest sein.

In einer Ausgestaltung ist das Vlies zum Direktanstrich ohne vorherige Oberflächenbehandlung geeignet, wodurch die Herstellung des Wandungselementes weiter vereinfacht wird.

Um ein hochwertiges Erscheinungsbild auch ohne Anstrich zu erreichen, kann das Vlies eine Vliestapete sein, insbesondere ist das Vlies einfarbig oder mit einem Motiv bedruckt. Beispielsweise ist das Vlies eine Fototapete.

In einer Ausführungsform hat das Vlies eine flächenbezogene Masse von 80 g/m² bis 200 g/m², insbesondere von 120 g/m² bis 180 g/m², weiter besonders von 140 g/m² bis 160 g/m².

Beispielsweise hat das Vlies eine Dicke von 0,15 mm bis 0,40 mm, insbesondere von 0,20 mm bis 0,35 mm.

In einer Ausführungsform hat die Holzlage eine Dicke von 50 mm bis 350 mm, insbesondere von 80 mm bis 140 mm, wodurch das Wandungselement für den gewünschten Einsatzzweck die notwendige Stabilität hat.

Beispielsweise besteht das Brettsperrholz der Holzlage aus drei Schichten, fünf Schichten, sieben Schichten oder neun Schichtenaus Massivholztafeln, wobei unter Schichten im Rahmen dieser Offenbarung Längs- und Querlagen an Massivholztafeln verstanden werden.

Ferner wird die Aufgabe gelöst durch ein Verfahren zur Herstellung eines Wandungselementes für ein Gebäude, insbesondere eines Wandungselements wie zuvor beschrieben, mit den folgenden Schritten:
- Bereitstellen einer Holzlage aus Brettsperrholz,
- Bereitstellen eines einstückigen Vlieses,
- Platzieren des Vlieses auf der Holzlage, und
- Befestigen des Vlieses auf der Holzlage, wodurch eine Vlieslage erzeugt wird.

Die zum Wandungselement beschriebenen Merkmale und Vorteile gelten gleichermaßen für das Verfahren und umgekehrt.

Die Holzlage wird zum Beispiel vor dem Befestigen des Vlieses abgebunden bzw. abgebunden bereitgestellt, oder das Wandungselement wird abgebunden.

In einer Ausführungsform wird das Vlies auf einer Rolle aufgerollt bereitgestellt, insbesondere wobei das Vlies eine Länge von wenigstens 5 m hat, und/oder wobei die Holzlage eine Länge und eine Höhe hat, die der Länge bzw. der Höhe des herzustellenden Wandungselements entspricht. Auf diese Weise wird die Herstellung großer Wandungselemente weiter vereinfacht.

Zur einfachen Befestigung des Vlieses kann Klebstoff auf der Holzlage aufgebracht werden, insbesondere vor dem Platzieren des Vlieses auf der Holzlage.

Das Aufbringen kann manuell, teilautomatisiert oder automatisch erfolgen.

Weitere Vorteile und Merkmale ergeben sich aus der nachfolgenden Beschreibung sowie aus den beigefügten Zeichnungen, auf die Bezug genommen wird. In den Zeichnungen zeigen:
- Fig. 1: ein Wandungselement gemäß einer Ausführungsform der Erfindung in Frontansicht,
- Figs. 2, 3: das Wandungselement gemäß Figur 1 in einer Draufsicht bzw. Seitenansicht, und
- Fig. 4: ein schematisches Ablaufdiagramm einer Ausführungsform des erfindungsgemäßen Verfahrens.

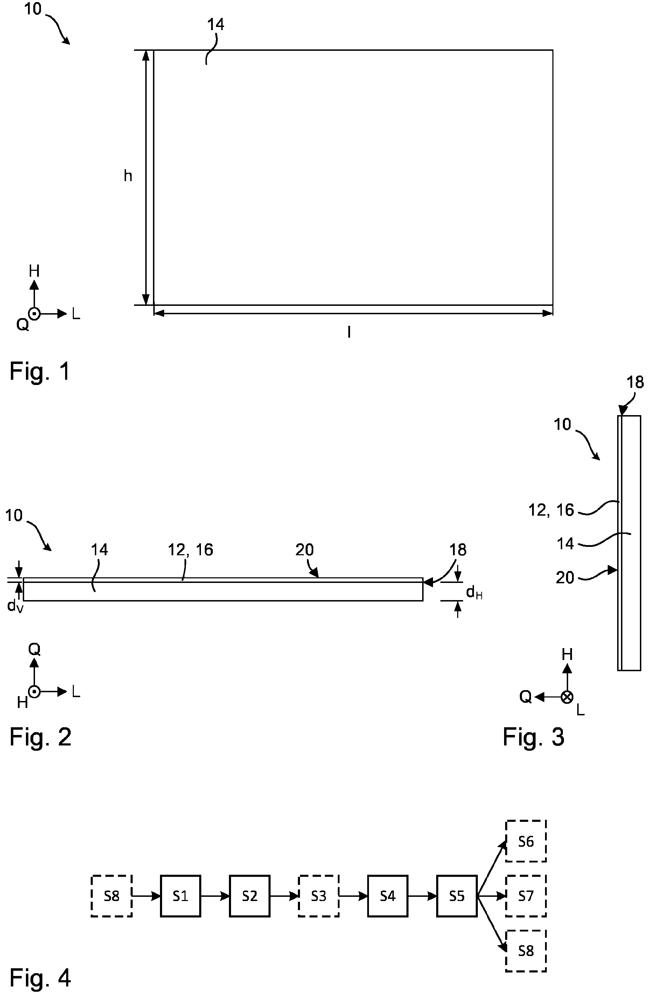

Die Figuren 1, 2 und 3 zeigen ein Wandungselement 10 in Frontansicht, Draufsicht bzw. Seitenansicht.

Das Wandungselement 10 ist ein Wandungselement für ein Gebäude, das insbesondere in einem Werk vorgefertigt wird und zur Errichtung des Gebäudes an den Ort der Baustelle gebracht wird.

Dort wird es mit anderen Wandungselementen 10 zu einem Gebäude zusammengefügt.

Das Wandungselement 10 ist beispielsweise ein Wandelement oder ein Deckenelement oder ein kombiniertes Wand- und Deckenelement.

Beispielsweise ist das Wandungselement 10 eine Trennwand, eine abgehängte Decke oder ein Wandverkleidungselement.

Das Wandungselement 10 weist eine Holzlage 14 und eine Vlieslage 12 auf. Die Holzlage 14 ist aus Brettsperrholz gebildet.

Das Wandungselement 10 hat eine Hochrichtung H, eine Längsrichtung L sowie eine Querrichtung Q.

Im gezeigten Ausführungsbeispiel ist das Wandungselement 10 plattenförmig, wobei jedoch auch andere Geometrien denkbar sind.

Das Brettsperrholz ist beispielsweise eine einzige Brettsperrholzplatte oder mehrere Brettsperrholzplatten bilden die Holzlage 14.

Das Brettsperrholz der Holzlage 14 ist in bekannter Weise aus verschiedenen Schichten von Massivholztafeln gebildet.

Im Rahmen dieser Offenbarung, wird von einer Schicht gesprochen, wenn die Massivholztafeln innerhalb eines Brettsperrholzes gemeint sind. Hingegen werden die verschiedenen Lagen des Wandungselements 10 als "Lagen" bezeichnet, um Verwechslungen zu vermeiden. Dies grenzt sich vom Sprachgebrauch im Stand der Technik ab, in dem die Schichten von Massivholztafeln innerhalb eines Brettsperrholzes teilweise auch als Lagen bezeichnet werden.

Das Brettsperrholz der Holzlage 14 besteht zum Beispiel aus drei bis neun Schichten von Massivholztafeln, insbesondere aus drei, fünf, sieben oder neuen Schichten.

Es ist denkbar, dass die Holzlage 14 mehrere Brettsperrhölzer aufweist, die in Querrichtung aneinander angrenzen.

Die Holzlage 14 hat eine Dicke d_{H} in Querrichtung Q von 50 mm bis 350 mm, insbesondere von 80 mm bis 140 mm.

Diese Dicke d_{H} entspricht somit der Dicke des einzigen Brettsperrholzes der Holzlage 14 oder der mehreren Brettsperrhölzer der Holzlage 14 zusammen.

Die Holzlage 14 hat eine Länge in Längsrichtung L, die der Länge 1 in Längsrichtung L des Wandungselements 10 entspricht.

Ebenfalls hat die Holzlage 14 eine Höhe in Hochrichtung H, die der Höhe h des Wandungselements 10 in Hochrichtung H entspricht.

Die Holzlage 14 ist somit bezüglich der Länge l und Höhe h so groß wie das Wandungselement 10.

Das Wandungselement 10 hat beispielsweise eine Länge 1 von mehr als 3,2 m, insbesondere von wenigstens 3,5 m. Denkbar ist auch, dass das Wandungselement 10 eine Länge 1 von wenigstens 5 m hat. In Hochrichtung H hat das Wandungselement 10 eine Höhe h von wenigstens 2,5 m, insbesondere von wenigstens 3 m.

Die Vlieslage 12 ist aus einem Vlies 16, d.h. die Vlieslage 12 besteht aus dem Vlies 16.

Die Vlieslage 12, insbesondere das Vlies 16, ist beispielsweise, wie im gezeigten Ausführungsbeispiel, direkt und vollflächig auf der Holzlage 14 befestigt. Beispielsweise ist die Vlieslage 12 bzw. das Vlies 16 auf die Holzlage 14 mittels eines Klebstoff 18 geklebt. Der Klebstoff kann ein Leim sein.

Der Klebstoff 18 basiert zum Beispiel nicht auf Harz. Denkbar ist auch, dass das Wandungselement 10 frei von einer Harzschicht oder einer Harzlage ist, die insbesondere die Vlieslage 12 an der Holzlage 14 befestigt.

Die Vlieslage 12 bzw. das Vlies 16 ist beispielsweise direkt auf die Holzlage 14 geklebt, d.h. dass keine Zwischenlagen, insbesondere keine Harzschichten oder Harzlagen, außer ggf. dem Klebstoff 18, vorhanden sind.

Denkbar ist auch, dass die Vlieslage 12 bzw. das Vlies 16 auf andere Weise, beispielsweise mittels Nägel oder Klammern, an der Holzlage 14 befestigt ist.

Im gezeigten Ausführungsbeispiel besteht das Wandungselement 10 somit aus der Vlieslage 12 bzw. dem Vlies 16 und der Holzlage 14. Gegebenenfalls besteht das Wandungselement 10 zudem noch aus dem Klebstoff 18 und/oder einer Farblage 20, wie einer Wandfarbe.

Die Vlieslage 12 bildet damit beispielsweise die äußere Lage des Wandungselements 10 und die Holzlage 14 bildet die andere, gegenüberliegende äußere Lage des Wandungselements 10. Eine der Oberflächen der Vlieslage 12 ist in diesem Falle im fertigen Zustand des Wandungselements 10 weiterhin zugänglich, zum Beispiel, um die Vlieslage 12 zu streichen.

Sofern eine Farblage 20 vorhanden ist, ist die Vlieslage 12 insbesondere an ihrer der Holzlage 14 abgewandten Oberfläche lediglich von der Farblage 20 bedeckt.

Das Vlies 16 weist beispielsweise Kunstfasern, insbesondere Polyester, Zellulosefasern und/oder Textilfasern auf.

Das Vlies 16 hat beispielsweise eine flächenbezogene Masse von 80 g/m² bis 200 g/m², insbesondere von 120 g/m² bis 180 g/m², weiter besonders von 140 g/m² bis 160 g/m².

Das Vlies 16 hat eine Dicke dv in Querrichtung Q von 0,15 mm bis 0,40 mm, insbesondere von 0,2 mm bis 0,35 mm.

Das Vlies 16 ist beispielsweise eine Vliestapete.

Die Vliestapete kann beispielsweise einfarbig sein, oder mit einem Motiv bedruckt sein. Die Motive können nahezu beliebig gewählt sein, sodass das Vlies 16 eine Fototapete sein kann.

Das Vlies 16 ist beispielsweise diffusionsoffen.

In Hochrichtung H und in Längsrichtung L erstreckt sich die Vlieslage 12 bzw. das Vlies 16 über die gesamte Höhe h und die gesamte Länge 1 des Wandungselements 10.

Die Länge der Vlieslage 12 in Längsrichtung L entspricht somit der Länge 1 des Wandungselements 10. Die Höhe der Vlieslage 12 in Hochrichtung H entspricht der Höhe h des Wandungselements 10.

Das Vlies 16 ist innerhalb der Vlieslage 12, d.h. über das gesamte Wandungselement 10 hinweg, einstückig. Die Vlieslage 12 besteht somit aus einem einzigen zusammenhängenden Vlies 16 und ist fugenlos.

Dadurch, dass die Vlieslage 12 fugenlos ist, ist es möglich, das Wandungselement 10 trotz seiner Größe als vorgefertigtes Element bereitzustellen. Hätte die Vlieslage 12 Nähte oder Kanten, an denen zwei verschiedene Vliese 16 aneinander anliegen, so würde dies beim Streichen des Wandungselements 10 zu einer sichtbaren Kante führen, die inakzeptabel ist. Auch Motive könnten an einer Kante unterbrochen oder versetzt werden.

Durch das Wandungselement 10 ist es somit möglich, auch Wandungselemente 10 vorgefertigt bereitzustellen, die im Gebäude ohne weiteren Wandbehang, sondern nur gestrichen verbaut sind.

Zur Herstellung eines solchen Wandungselements 10 wird beispielsweise das in Figur 4 schematisch dargestellte Verfahren durchgeführt. Zum Beispiel wird zunächst die Holzlage 14 bereitgestellt (S1).

Anschließend, gleichzeitig oder zuvor wird das Vlies 16 bereitgestellt (S2).

Das Vlies 16 ist einstückig und beispielsweise entlang seiner Länge auf einer Rolle aufgerollt.

Die Rolle hat somit eine Höhe entsprechend der Höhe des Vlieses 16.

Insbesondere kann ein Vlies mit einer Länge von wenigstens 5 m auf der Rolle aufgerollt bereitgestellt werden.

Das Vlies 16 ist beispielsweise bereits mit einem Motiv versehen.

Soll die Befestigung mittels eines Klebstoffs 18 erfolgen, wird bei S3 der Klebstoff 18 bzw. der Leim auf die Holzlage 14 aufgebracht.

Anschließend wird das Vlies 16 auf der Holzlage 14 platziert (S4) und dort befestigt (S5).

Dann kann das Vlies 16, das über die Holzlage 14 übersteht, abgeschnitten werden (S6).

Denkbar ist ebenfalls, dass das Wandungselement 10 bereits im Werk angestrichen wird, d.h. bei S7 eine Farblage 20 auf das Vlies 16 aufgebracht wird.

Zudem kann nach dem Befestigen (S5) das Wandungselement 10 entsprechend seiner zukünftigen Verwendung entsprechend abgebunden werden (S8).

Denkbar ist auch, dass die Holzlage 14 zuvor abgebunden wurde (gestrichelt als S8 dargestellt).

Auf diese Weise wird ein Wandungselement 10, das mit Farbe gestrichen werden kann und/oder bereits optisch hochwertig ist, auf einfache und kostengünstige Weise hergestellt.

## Patentansprüche

1. Wandungselement für ein Gebäude, insbesondere Wand-, Decken- und/oder Dachelement, mit einer Holzlage (14) und einer Vlieslage (12),
wobei die Holzlage (14) aus Brettsperrholz ist und die Vlieslage (12) aus einem einstückigen Vlies (16) ist.

2. Wandungselement nach Anspruch 1, **dadurch gekennzeichnet, dass** die Vlieslage (12), insbesondere das Vlies (16), auf der Holzlage (14) befestigt ist, insbesondere vollflächig und/oder direkt.

3. Wandungselement nach Anspruch 1 oder 2, **dadurch gekennzeichnet, dass** das Wandungselement (10) vorgefertigt ist.

4. Wandungselement nach einem der vorhergehenden Ansprüche, **dadurch gekennzeichnet, dass** das Wandungselement (10), insbesondere das Vlies (16), eine Länge (1) von mehr als 3,2 m, insbesondere von wenigstens 3,5 m, weiter besonders von wenigstens 5 m hat.

5. Wandungselement nach einem der vorhergehenden Ansprüche, **dadurch gekennzeichnet, dass** das Wandungselement (10), insbesondere das Vlies (16), eine Höhe (h) von wenigstens 2,50 m, insbesondere von wenigstens 3,0 m hat.

6. Wandungselement nach einem der vorhergehenden Ansprüche, **dadurch gekennzeichnet, dass** das Wandungselement (10) aus der Holzlage (14) und der Vlieslage (12) besteht; oder aus der Holzlage (14) und der Vlieslage (12) sowie einem Klebstoff (18) und/oder einer Farblage (20) besteht.

7. Wandungselement nach einem der vorhergehenden Ansprüche, **dadurch gekennzeichnet, dass** das Vlies (16) Kunstfasern, insbesondere Polyester, Zellulosefasern und/oder Textilfasern aufweist.

8. Wandungselement nach einem der vorhergehenden Ansprüche, **dadurch gekennzeichnet, dass** das Vlies (16) diffusionsoffen, dimensionsstabil und/oder zum Direktanstrich ohne vorherige Oberflächenbehandlung geeignet ist.

9. Wandungselement nach einem der vorhergehenden Ansprüche, **dadurch gekennzeichnet, dass** das Vlies (16) eine Vliestapete ist, insbesondere einfarbig oder mit einem Motiv bedruckt.

10. Wandungselement nach einem der vorhergehenden Ansprüche, **dadurch gekennzeichnet, dass** das Vlies (16) eine flächenbezogene Masse von 80 g/m² bis 200 g/m², insbesondere von 120 g/m² bis 180 g/m², weiter besonders von 140 g/m² bis 160 g/m² hat; und/oder
dass das Vlies (16) eine Dicke von 0,15 mm bis 0,40 mm, insbesondere von 0,20 mm bis 0,35 mm hat.

11. Wandungselement nach einem der vorhergehenden Ansprüche, **dadurch gekennzeichnet, dass** die Holzlage (14) eine Dicke von 50 mm bis 350 mm, insbesondere von 80 mm bis 140 mm hat.

12. Wandungselement nach einem der vorhergehenden Ansprüche, **dadurch gekennzeichnet, dass** das Brettsperrholz der Holzlage (14) aus zwischen drei und neun Schichten, insbesondere aus drei Schichten, fünf Schichten, sieben Schichten oder neun Schichten Massivholztafeln besteht.

13. Verfahren zur Herstellung eines Wandungselementes (10) für ein Gebäude, insbesondere eines Wandungselements (10) nach einem der vorhergehenden Ansprüche, mit den folgenden Schritten:
- Bereitstellen einer Holzlage (14) aus Brettsperrholz,
- Bereitstellen eines einstückigen Vlieses (16),
- Platzieren des Vlieses (16) auf der Holzlage (14), und
- Befestigen des Vlieses (16) auf der Holzlage (14), wodurch eine Vlieslage (12) erzeugt wird.

14. Verfahren nach Anspruch 13, **dadurch gekennzeichnet, dass** das Vlies (16) auf einer Rolle aufgerollt bereitgestellt wird, insbesondere wobei das Vlies (16) eine Länge von wenigstens 5 m hat, und/oder wobei die Holzlage (14) eine Länge und eine Höhe hat, die der Länge (1) bzw. der Höhe (h) des herzustellenden Wandungselements (10) entspricht.

15. Verfahren nach Anspruch 13 oder 14, **gekennzeichnet durch** Aufbringen eines Klebstoffs (18) auf der Holzlage (14), insbesondere vor dem Platzieren des Vlieses (16) auf der Holzlage (14).
